# EUROPÄISCHE PATENTSCHRIFT

(11) **EP 1 278 982 B1**
(45) Veröffentlichungstag und Bekanntmachung des Hinweises auf die Patenterteilung: **29.09.2004**
(21) Anmeldenummer: 01921709.0
(22) Anmeldetag: 19.04.2001
(51) Int. Cl.: F16L 55/17, F16L 21/06, F16L 17/04

(54) **ROHRKUPPLUNG**
PIPE COUPLING
RACCORD POUR TUYAUX

(30) Priorität: 22.04.2000 CH 795002000
(43) Veröffentlichungstag der Anmeldung: 29.01.2003
(73) Patentinhaber: Straub Werke AG, 7323 Wangs (CH)
(72) Erfinder: HOPPELER, Peter, CH-7206 Igis (CH)
(74) Vertreter: Rosenich, Paul, Dipl.-Ing.
(86) Internationale Anmeldenummer: PCT/IB2001/000644
(87) Internationale Veröffentlichungsnummer: WO 2001/081814

(56) Entgegenhaltungen:
- EP-A- 0 145 020
- EP-A- 0 296 027
- EP-A- 0 918 183
- WO-A-97/45670
- US-A- 5 505 497
- PATENT ABSTRACTS OF JAPAN vol. 017, no. 189 (P-1521), 13. April 1993 (1993-04-13) & JP 04 340503 A (SOMAR CORP), 26. November 1992 (1992-11-26)

## Beschreibung

Die vorliegende Erfindung betrifft eine Rohrkupplung bzw. Rohrschelle zum Verbinden oder Reparieren von Rohren gemäss dem Oberbegriff von Anspruch 1.

Die US 3,861,723 offenbart eine Rohrkupplung mit einem in Längsrichtung gespaltenen Gehäuse, welches eine Dichtung umgibt. Das Gehäuse besteht aus einem biegsamen Metallband, dessen Enden als Laschen ausgebildet sind. Die Laschen dienen der Aufnahme einer Spanneinrichtung, mit Hilfe welcher die Laschen gegeneinander bewegt werden können. Zum Verbinden zweier Rohre werden deren Rohrenden soweit in die Rohrkupplung eingeschoben, bis diese aneinander stossen. Danach werden die Laschen mit der Spanneinrichtung zusammengezogen, wodurch sich die Dichtung fest an die Rohre legt und die Stossfuge zwischen den Rohrenden abdichtet.

Die Anmelderin vertreibt seit längerem Rohrkupplungen, welche besonders ausgerüstet sind, um die Kupplung selbst sowie den gekuppelten bzw. reparierten Bereich des Rohres auch gegen Feuer zu schützen. Der Schutz gegen Feuer wird dadurch erreicht, dass man über eine herkömmliche Kupplung - bestehend aus einer Dichtmanschette aus elastomerem Material, welche die eigentliche Abdichtung bildet und einem Metallgehäuse, das die Dichtmanschette gegen das Rohr presst - ein mehrlagiges Keramikfasergewebe von bestimmter Dicke legt und dieses mittels metallischem Schutzmantel gegen das Metallgehäuse lagefixiert hält. Der Schutzmantel hat dabei in erster Linie die Funktion, eine mechanische Beschädigung des Keramikfasergewebes von aussen zu vermeiden. Der Schutzmantel hat auch die Aufgabe, das Abfasern von Gewebefasern zu verhindern. Durch den Schutzmantel und das darunterliegende Gewebe wird bei diesem bekannten Aufbau nicht nur das Gehäuse und damit die innenliegende Dichtungsmanschette geschützt, sondern auch der Bereich des oder der Spannschrauben, die das Gehäuse zusammenspannen. Der Schutzmantel ist durch Nieten mit dem Metallgehäuse verbunden. Dies erfordert einen hohen Vorfertigungsgrad.

Die so flammgeschützte Kupplung ist relativ aufwendig in der Herstellung und daher teuer.

Die Metallgehäuse und auch der Schutzmantel sind vor allem für Off-shore-Anwendungen, bzw. im Schiffs- und Fahrzeugbau aus rostfreiem Stahl gefertigt, was ihren Preis weiter erhöht.

Die WO-97/45670 gibt eine andere feuerfeste Kupplung an, bei der zwei Gehäuse vorgesehen sind, zwischen denen ein wärmeisolierendes Fasermaterial eingebracht ist. Im Unterschied zum oben beschriebenen Aufbau mit nur einem Gehäuse und einem zusätzlichen Schutzmantel, sind bei diesem bekannten Aufbau die Spannschrauben des Gehäuses nicht geschützt. Dies ist insofern nachteilig, als - bei genügend langer Wärmeeinwirkung auf die Spannschrauben - diese einen thermischen Schaden nehmen können, bzw. unter Wärmeeinwirkung Ihre Spannkraft verlieren, indem sie als Ergebnis der Wärmedehnung Ihre Länge vergrössern. Dies kann während der Feuereinwirkung zu einer Minderfunktion der Kupplung führen. Zudem ist bei diesem bekannten Aufbau nachteilig, dass das Wärmeisolationsmaterial zwischen den beiden Gehäuseteilen unter dem Spanndruck der Spannschrauben liegt und dadurch komprimiert wird. Wärmeisolierende Lufträume im Wärmeisolationsmaterial gehen dadurch verloren.

Im Brandschutz waren, wie auch in der erwähnten WO-97/45670 auf Seite 2 unten und Seite 3 oben angegeben, früher andere Flammschutzmassnahmen bekannt, bei denen Mineralwolle und Feuerschutzgewebe oder auch Asbestmatten um die zu schützenden Bauteile gewickelt und befestigt wurden. Dies bekannten Techniken erforderten hohe Fachkenntnis und waren daher von der Fachwelt als unpraktisch eingestuft.

Durch die Verwendung von Keramikfasermatten oder Keramikfasergewebematten, die eine bessere mechanische Festigkeit als Asbestfasermatten oder herkömmliche Mineralwollmatten haben, könnte eine Verbilligung dadurch erreicht werden, dass man über das Metallgehäuse einer herkömmlichen Kupplung ein ein- oder mehrlagiges Keramikfasergewebe legt. Das Keramikfasergewebe sollte dabei so gelegt werden, dass es sowohl im bauchigen Durchmesser-Bereich des Metallgehäuses, als auch im durchmesser-zurückspringenden Randbereich des Metallgehäuses gut an diesem anliegt. Bevorzugt haben die dafür zu verwendenden Keramikfasergewebe einen strumpfförmigen, vorzugsweise dehnelastischen Aufbau und können bei der Kupplungsmontage in einer oder mehreren Lagen über das Metallgehäuse gezogen werden. Zur zusätzlichen Sicherheit könnten diese Lagen durch einfache metallische Klemmbänder aus feuersicherem und korrosionsfestem Metall am Rohr gehalten werden. Solche erfinderischen und neuen strumpfförmigen Keramikfasergewebe schützen die komplette Kupplung, damit auch das Kupplungsgehäuse und die Spannschrauben.

Durch diesen neuen Aufbau entfällt der hohe Vorfertigungsgrad und die eigentliche Montage des Feuerschutzes erfolgt nach Bedarf direkt am Rohr. Dies ist insofern vorteilhaft, als sowohl die Kupplungen als auch die Feuerschutzausrüstung dazu unabhängig von einander und nach Bedarf geliefert werden können. Die bereits erfolgten Flammprüfungen zeigten gute Resultate. Die mechanische Festigkeit der Keramikfasergewebe ist für viele Anwendungen ausreichend.

Diese an sich bereits erfinderische Verbesserungsmassnahme des Weglassens des Schutzmantels bei geeignetem Keramikfasermaterial ist jedoch - obwohl eine neue Idee für einen Feuerschutz - nicht Gegenstand der vorliegenden Patentansprüche.

Die vorliegenden Patentansprüche betreffen eine weitergehende Verbesserung bzw. Verbilligung von feuergeschützten Kupplungen.

Erfindungsgemäss wird als Flammschutz für die Kupplungen ein an sich bekanntes, intumeszierendes (d.h. unter Hitzeeinwirkung aufquellendes) Material z.B. in Form einer Farbbeschichtung geschützt. Überraschender Weise zeigte sich auch bei den speziell durchgeführten Flammprüfungen, dass die intumeszierende Wirkung und durch die sich daraus ergebenden Feuerwiderstände ausreichend als Schutz für die Kupplung, insbesondere für die Dichtmanschette bzw. für die Dichtelemente wirkt.

Durch die Erfindung ergeben sich dabei neben dem reinen Ersatz der einen, an sich bekannten Feuerschutzmassnahme (Asbest- bzw. Keramikfasermatten mit Schutzmänteln) durch eine andere Feuerschutzmassnahme (intumeszierende Farbbeschichtung) neue und symbiotische erfindungsgemässe Effekte. Die wesentlichsten sind:
° Verbilligung des Herstellverfahrens, da die intumeszierende Beschichtung wesentlich wirtschaftlicher ist als die Keramikfasermatten in Verbindung mit dem Schutzmantel, die erfindungsgemäss entfallen können. Die Verbilligung ist insbesondere dann gross, wenn der Schutzmantel aus rostfreiem Stahl angefertigt worden ist.
° Baugrössenreduktion der Gesamtkupplung, da die intumeszierende Beschichtung weniger aufträgt, als herkömmliche Flammschutzmassnahmen mit Gewebeauflagen.
° Die intumeszierende Beschichtung kann auf alle Einzelteile der Kupplung aufgebracht werden, auch Spannschrauben Federklemmringe u.dgl. können vor Feuereinwirkung wirkungsvoll geschützt werden.
° Reduktion der Qualitäts-Anforderung an das metallische Kupplungsgehäuse, was zu einer weiteren Kostenreduktion in der Herstellung führen kann. Herkömmliche intumeszierende Flammschutzbeschichtungen, wie z.B. NoFire (R) von nofire.technologies, Inc, (zur erfindungsgemässen Anwendung vorgeschlagen) können nämlich sowohl als Grundfarbe, als auch als Abdeckfarbe aufgetragen werden. Im ersten Fall übernimmt die ein- oder mehrmalige Beschichtung gleichzeitig eine Schutzfunktion gegen unerwünschte chemische Oberflächenveränderungen bzw. Korrosion, so dass anstelle von rostfreiem Stahl unlegierte C-Stähle verwendet werden könnten. Im zweiten Fall kann das Kupplungsgehäuse durch geeignete, an sich bekannte Rost- bzw. Korrosionsschutzmassnahmen vorbehandelt und durch das Nachstreichen mit der Flammschutzbeschichtung zusätzlich geschützt werden.
° Vereinfachung der Flammschutzaufbringung durch Massenfertigung. So können beliebig viele Kupplungsgehäuse in einem Arbeitsgang in einer geeigneten Farbaufbringungsanlage beschichtet werden. Bisher erforderliche Handarbeit entfällt weitgehend.
° Die mechanischen Eigenschaften der erfindungsgemäss aufgebrachten Flammschutzbeschichtung sind gegen Abnutzung beständiger als herkömmliche Fasermatten und Bandagen.
° Im Falle von Revisionen, Reparaturen von montierten Kupplungen etc. kann der Flammschutz ohne besonderen Aufwand von Hilfskräften sehr einfach durch Anstreichen vor Ort ausgebessert bzw. erneuert werden.
° Wenn die lokalen Platzverhältnisse es erlauben, kann die Beschichtung auch mittels Spritzpistole oder Spraydose aufgetragen werden.
° Intumeszierende Flammschutzbeschichtungen können in verschiedenen Farben und Farbmischungen bereitgestellt werden und ermöglichen so eine spezielle Kennzeichnung, Signalisierung oder auch Anpassung an Umgebungsfarben. So können beispielsweise verschiedene Kupplungsqualitäten durch verschiedene Farben oder Farbtöne kenntlich gemacht werden. Dies erleichtert beispielsweise die Lagerhalterung und/oder die Einbaukontrolle.

Selbstverständlich kann die Erfindung auch in Kombination mit an sich bekannten Flammschutzmassnahmen angewendet werden, indem zusätzlich zu den bekannten oder neuen Flammschutzmassnahmen (mit aussenlagiger Keramikfasergewebematte) die Flammschutzbeschichtung aufgebracht wird.

Das Aufbringen von Flammschutzbeschichtung auf - gegebenenfalls nur mehr einlagige - Keramikgewebematten ergibt als Effekt eine Verbesserung der Oberflächeneigenschaften dieser Matten und zusätzlich eine Verbesserung der Feuerbeständigkeit. Insofern ist eine Kombination der zuerst beschriebenen, jedoch hier zunächst nicht in den Ansprüchen angegebenen Erfindung mit aussenlagigem Keramikfasergewebe mit der zusätzlich aufgebrachten Flammschutzbeschichtung vorteilhaft. Das Gewebe dient dabei als Trägergerüst mit grosser innerer Oberfläche für die Flammschutzbeschichtung, so dass dieser gut haftet und in einem einzigen Aufbringvorgang in besonders grosser Menge aufgebracht werden kann. Eine grosse Menge intumeszierende Farbbeschichtung entwickelt andererseits jedoch eine besonders starke Intumeszenzwirkung und damit einen besonders guten Flammschutz.

Diesen erfindungsgemässen Effekt kann man sich auch beim Überziehen ganzer Rohrstränge zu Nutze machen, indem diese mit Gewebe überzogen und anschliessend mit intumeszierender Farbe beschichtet werden.

Die Erfindung ist nicht eingeschränkt auf Aufbauten mit einer innenliegenden Dichtungsmanschette aus einem Polymer. Sie ist auch unabhängig vom Aufbau des Metallgehäuses der Kupplung. Sollte dieses Längs- oder Querschlitze haben, ist es von Vorteil, wenn auch die Flächen dieser Schlitze mit intumeszierender Farbe beschichtet sind. Dies kann sowohl im Herstellerwerk, als auch am Montageort durch Nachstreichen mit Flammschutzfarbe erfolgen.

Insofern umfasst die Erfindung auch alle Anwendungen von Kupplungen, wie z. B. zur Abdichtung eines Lecks oder Verbindung eines Rohrstosses.

Nachträglich aufgebrachte Flammschutzfarbe sichert gegebenenfalls Spannschrauben gegen unerwünschtes selbsttätiges Losdrehen. Abgesehen davon, bildet die Flammschutzfarbe an der durch sie gesicherten Spannschraube einen Sicherungsindikator. Sollte sich nämlich eine Spannschraube selbsttätig oder durch Dritteinwirkung lösen, so zerreisst die Beschichtung im Spannschraubenbereich Dies ist in der Regel von freiem Auge sichtbar, so dass bei einem allfälligen Lokalaugenschein allfällige lose Spannschrauben oder Muttern ohne Mühe erkannt werden können. Andere, aufwendigere Sicherungsmassnahmen können dadurch u.U. entfallen.

Abgesehen von der Sicherung an der Spannschraube, bilden übergreifende Beschichtungen am Übergang zwischen Gehäuse und allfälligen Spaltdeckblechen ebenso Sicherungsindikatoren, indem sie auch dort zerreissen, wenn das Gehäuse öffnet.

Andererseits kann durch eine im Herstellerwerk angebrachte randbegrenzte Beschichtung an Spaltdeckblechen für die Montage eine Hilfsmarkierung gebildet werden, indem durch sie angegeben wird, wie weit das Gehäuse durch die Spannschrauben zusammengezogen werden muss oder darf.

Die erfindungsgemässe Flammschutzbeschichtung kann in beliebigen Farben bzw. Farbtönen eingefärbt sein, so dass bei Bedarf einerseits auch eine Signalwirkung, andererseits aber auch eine optische Anpassung an die Umgebung erzielbar ist.

Die Erfindung wird nachstehend, anhand von Ausführungsbeispielen näher erläutert. Es zeigen:
Fig. 1a und 1 b eine herkömmliche Rohrkupplung mit Keramikfasergeflecht und Schutzmantel;
Fig. 2 einen ausschnittweisen Querschnitt durch eine neue Kupplung mit aussenlagigem Karamikfasergewebe ohne Schutzmantel;
Fig. 3 die in Fig. 2 dargestellte Rohrkupplung, entlang der Linie III - III geschnitten;
Fig. 4 einen erfindungsgemässen Aufbau ohne Keramikfasergewebe mit ausschnittsweisem Querschnitt und
Fig. 5 die in Fig. 4 dargestellte Rohrkupplung, entlang der Linie V-V geschnitten.

Die Figuren werden übergreifend beschrieben. Gleiche Bezugszeichen betreffen gleiche Bauteile, Bezugszeichen mit unterschiedlichen Indizes betreffen Bauteile mit gleichen oder ähnlichen Funktionen jedoch unterschiedlichem Aufbau.

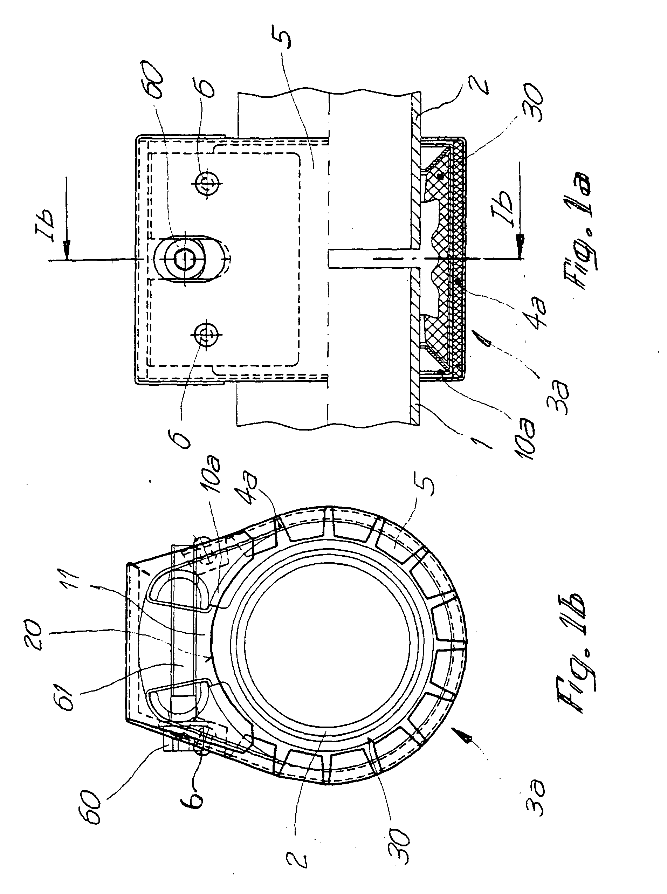

In den Fig.1 a und 1 b erkennt man zwei Rohrenden 1 und 2, die durch eine Kupplung 3a miteinander verbunden sind. Die eigentliche Abdichtung ist durch eine Dichtmanschette 30 bewerkstelligt, die durch ein metallisches Gehäuse 10a gegen die Rohre 1 und 2 gedrückt gehalten ist. Quer zu einem Längsspalt 11 im Gehäuse 10a spannt ein Schaft 61 einer Spannschraube 60 das Gehäuse 10a über einer Blecheinlage 20 zusammen. Über das Gehäuse 10a sind mehrere Lagen aus einem Keramikgeflecht 4 gewunden, die den eigentlichen Flammenschutz übernehmen. Das Keramikgeflecht 4 ist durch einen metallischen Schutzmantel 5 nach aussen geschützt und gegen das Gehäuse 10a gedrückt gehalten. Der Schutzmantel 5 ist mittels Nieten 6 mit dem Gehäuse 10a verbunden, so dass Schutzmantel 5, Keramikgeflecht 4 und Gehäuse 10a eine Einheit bilden. Diese Einheit wurde vorgefertigt, woraus sich ein erheblicher Vorfertigungsgrad ergab.

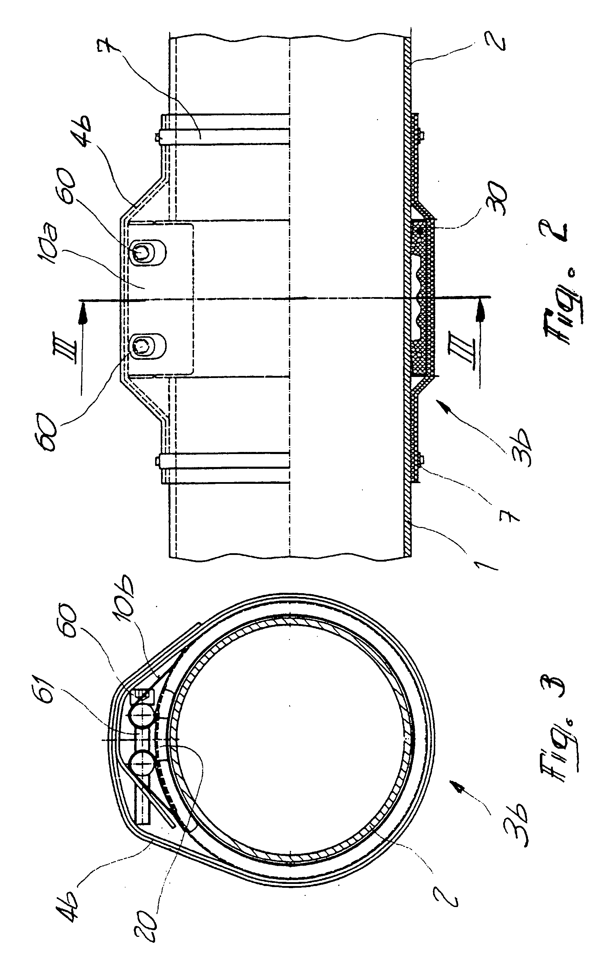

Fig.2 und 3 zeigen demgegenüber eine neue und erfinderische Kupplung 3b, die ebenso über eine Dichtmanschette 30, ein Gehäuse 10b und über Spannschrauben 60 verfügt. Auch ist ein Keramikfasergewebe 4b vorgesehen, das dem Flammschutz dient. Dieses Gewebe 4b ist jedoch von solcher Beschaffenheit, dass es nicht mehr durch einen Schutzmantel zusätzlich geschützt werden muss. Es ist bevorzugt, aus einem strumpfähnlichen, dehnungselastischen gewobenen Keramikfaser-Material aufgebaut, so dass es sich elastisch über das KupplungsGehäuse 10b ziehen lässt, oder es ist, wie herkömmlich über das Gehäuse 10b gewickelt und mittels Klemmbändern 7 an den Rohren 1 und 2 festgelegt.

Mehrlagigkeit bzw. ausreichende Dicke dieses Gewebes 4b bieten neu den Flammschutz. Gemäss einer Abwandlung dieser Erfindung, kann an der Oberfläche dieses Gewebes 4b eine intumeszierender Beschichtung aufgebracht sein, wie nicht näher dargestellt.

Die Beschichtung dient einerseits einem verbesserten Flammschutz, andererseits einer Erhöhung der Abriebfestigkeit des Gewebes 4b gegenüber mechanischer Beanspruchung. Erfindungsgemäss kann bei der Kombination Gewebe mit intumeszierender Beschichtung die Gewebestärke reduziert, bzw. sogar ein Gewebe von geringerer Qualität gewählt werden. Solche neuen Gewebeüberzüge mit intumeszierender Beschichtung können weiterhin auch für ganze, besonders exponierte Rohrstränge eingesetzt werden. Der Vorteil gegenüber einem Aufstreichen der intumeszierenden Beschichtung direkt auf die Rohre liegt bei dieser Erfindungsvariante in der grossen Aufnahmekapazität (Saugfähigkeit) des Gewebes, so dass mit einer einmaligen Beschichtung eine hohe Intumeszenzwirkung erzielt werden kann.

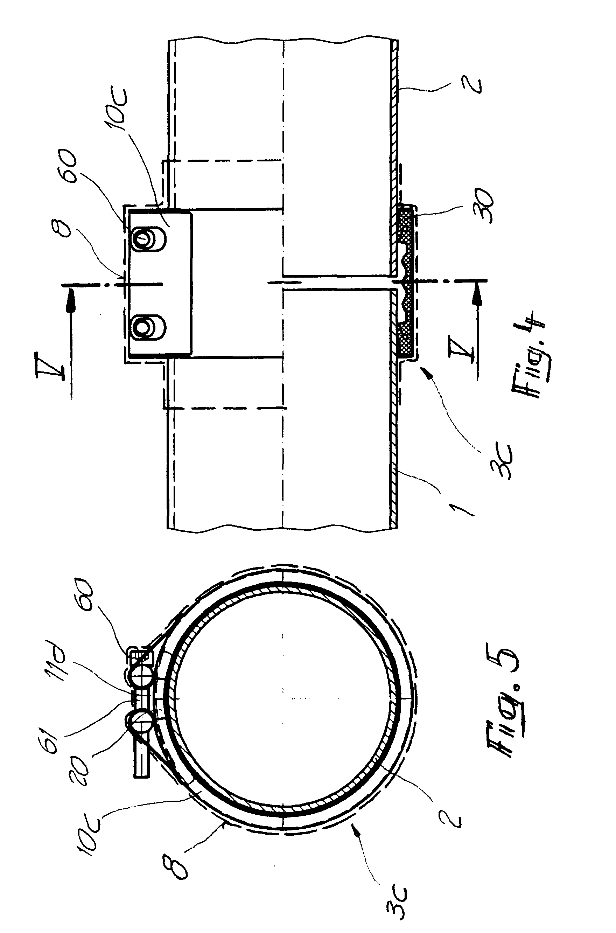

Fig.4 und 5 zeigen die kostengünstigste Variante der vorliegenden Erfindung: Dabei ist direkt auf einem Gehäuse 10c eine intumeszierende Beschichtung 8 aufgebracht, die - wie an sich bekannt - erst bei Feuerbeanspruchung aufquillt und dadurch eine Feuerschutzwirkung entfaltet.

Bei den dargestellten Rohrkupplungen wird der Längsspalt 11 d durch eine parallel zur Längsachse des Gehäuses 10c verlaufende, im Querschnitt entsprechend dem Gehäuseradius gewölbte Blecheinlage 20 überdeckt. Im Innern des Gehäuses 10c und der Blecheinlage 20 ist die Dichtmanschette 30 aus einem Elastomer zur Abdichtung angeordnet.

Die gezeigten Ausführungen der Rohrkupplungen sind zur Reparatur an bestehenden Rohrleitungen oder zum Verbinden von Rohrleitungsenden 1,2 vorgesehen. Damit die Kupplung bei Reparaturen über den geschlossenen Rohrstrang montiert werden kann, ist die Dichtmanschette 30 bei Bedarf mit einem nicht dargestellten Längsschlitz versehen, so dass sich die Ränder bei montierter Kupplung dichtend stossen oder überlappen.

Da sich die Erfindung jedoch um den verbesserten bzw. vereinfachten Flammschutz dreht, ist das eigentliche Innenleben der Kupplung nebensächlich und die dargestellten Kupplungsformen sind nicht einschränkend für den Erfindungsschutz. Insbesondere sind Dichtungsmanschetten nicht einschränkend. Sie können durch Dichtungsringe o.dgl. ersetzt sein.

### Bezugszeichenliste

- 1: Rohrende
- 2: Rohrende
- 3: Kupplung a-c
- 4: Keramikgewebegeflecht a-b
- 5: Schutzmantel
- 6: Niet
- 7: Spannband
- 8: intumeszierender Beschichtung
- 10: Gehäuse a-c
- 11: Längsspalt
- 20: Blecheinlage
- 30: Dichtmanschette
- 60: Spannschraube
- 61: Schaft

## Patentansprüche

1. Rohrkupplung oder Rohrschelle (3) zum Verbinden oder Reparieren von Rohren (1,2) mit wenigstens einem Dichtungselement, z.B. einer Dichtmanschette (30) und einem Gehäuse (10), das im montierten Zustand das Dichtungselement (30) gegen das bzw. die Rohre (1,2) gedrückt hält, und mit einer Feuerschutzausrüstung, **dadurch gekennzeichnet, dass** die Feuerschutzausrüstung durch eine intumeszierende Beschichtung gebildet ist, die an der Aussenseite des Gehäuses (10) aufgebracht ist.

2. Rohrkupplung nach Anspruch 1, **dadurch gekennzeichnet, dass** die intumeszierende Beschichtung (8) mehrlagig aufgebracht ist.

3. Rohrkupplung nach Anspruch 1 oder 2, **dadurch gekennzeichnet, dass** die intumeszierende Beschichtung gewebegebunden ist, wobei das Gewebe (4) über dem Gehäuse (10) angeordnet ist.

4. Rohrkupplung nach Anspruch 3, **dadurch gekennzeichnet, dass** das Gewebe aus - insbesondere strumpfartigem - Keramikfasergeflecht (4) aufgebaut ist.

5. Rohrkupplung nach einem der vorhergehenden Ansprüche, **dadurch gekennzeichnet, dass** die intumeszierende Beschichtung (8) als Losdrehsicherung wenigstens eine Spannschraube (60) des Gehäuses (10) umschliesst.

6. Rohrkupplung nach einem der vorhergehenden Ansprüche, **dadurch gekennzeichnet, dass** die intumeszierende Beschichtung (8) mit einer Signalfarbe versehen ist.

7. Rohrkupplung nach einem der vorhergehenden Ansprüche, **dadurch gekennzeichnet, dass** die intumeszierende Beschichtung (8) als Schutz gegen chemische oder korrosive Veränderungen des metallischen Gehäuses (10) eingesetzt ist.

8. Rohrkupplung nach einem der Ansprüche 1 bis 6, **dadurch gekennzeichnet, dass** zwischen der intumeszierenden Beschichtung und dem Gehäuse (10) eine Antikorrosionsschutzschicht, vorzugsweise eine Rostschutzfarbe, aufgebracht ist.

9. Verfahren zum Schützen einer Rohrkupplung vor Feuereinwirkung nach einem der vorhergehenden Ansprüche, **dadurch gekennzeichnet, dass** die intumeszierende Beschichtung (8) wenigstens teilweise im Zuge des Herstellens, bzw. der Vormontage der mechanischen Teile der Kupplung (3) im Herstellerwerk oder im Zuge der Montage, bzw. unmittelbar nach Montage der Kupplung (3), an deren Aussenfläche aufgebracht wird,

## Claims

1. Pipe coupling or pipe clip (3) for connecting or repairing pipes (1, 2), comprising at least one sealing element, for example a gasket (30), and a housing (10) which, in the assembled state, holds the sealing element (30) pressed against the pipe or pipes (1, 2), and comprising a fireproof treatment, **characterized in that** the fireproof treatment is formed by an intumescent coating which is applied on the outside of the housing (10).

2. Pipe coupling according to Claim 1, **characterized in that** the intumescent coating (8) is applied in a plurality of layers.

3. Pipe coupling according to Claim 1 or 2, **characterized in that** the intumescent coating is fabric-bound, the fabric (4) being arranged over the housing (10).

4. Pipe coupling according to Claim 3, **characterized in that** the fabric is composed of - in particular a stocking-like - ceramic fibre braid (4).

5. Pipe coupling according to any of the preceding Claims, **characterized in that** the intumescent coating (8) prevents unscrewing by enclosing at least one clamping screw (60) of the housing (10).

6. Pipe coupling according to any of the preceding Claims, **characterized in that** the intumescent coating (8) is provided with a signal colour.

7. Pipe coupling according to any of the preceding Claims, **characterized in that** the intumescent coating (8) is used as protection against chemical or corrosive changes of the metallic housing (10).

8. Pipe coupling according to any of Claims 1 to 6, **characterized in that** an anticorrosion protective coat, preferably an antirust paint, is applied between the intumescent coating and the housing (10).

9. Method for protecting a pipe coupling from the action of fire according to any of the preceding Claims, **characterized in that** the intumescent coating (8) is applied at least partly in the course of production or of preassembly of the mechanical parts of the coupling (3) at the manufacturer's factory or in the course of assembly or immediately after assembly of the coupling (3), to the outer surface thereof.

## Revendications

1. Raccord pour tuyaux ou bride pour tuyaux (3) pour raccorder ou réparer des tuyaux (1, 2) comprenant un élément d'étanchéité , par exemple une garniture cylindrique (30), et un boîtier (10), qui, en état monté, arrête l'élément d'étanchéité (30) pressé contre le ou les tuyaux (1, 2), et avec un équipement coupe-feu, **caractérisé en ce que** l'équipement coupe-feu est formé d'une enduction gonflante (intumescente), qui est appliquée à l'extérieur du boîtier (10) .

2. Raccord pour tuyaux selon la revendication 1, **caractérisé en ce que** l'enduction gonflante (intumescente) (8) est appliquée en plusieurs couches.

3. Raccord pour tuyaux selon la revendication 1 ou 2, **caractérisé en ce que** l'enduction gonflante (intumescente) est fixée à un tissu, ce tissu (4) étant disposé sur le boîtier (10).

4. Raccord pour tuyaux selon la revendication 3, **caractérisé en ce que** le tissu est construit d'un entrelacement de fibres céramiques (4), particulièrement en forme de bas.

5. Raccord pour tuyaux selon une quelconque des revendications précédentes, **caractérisé en ce que** l'enduction gonflante (intumescente) (8) entoure au moins une vis tendeuse (60) du boîtier (10) comme frein d'écrou.

6. Raccord pour tuyaux selon une quelconque des revendications précédentes, **caractérisé en ce que** l'enduction gonflante (intumescente) (8) est prévue d'une couleur de signal.

7. Raccord pour tuyaux selon une quelconque des revendications précédentes, **caractérisé en ce que** l'enduction gonflante (intumescente) (8) est utilisée comme protection contre des changements chimiques ou corrosifs du boîtier métallique (10).

8. Raccord pour tuyaux selon une quelconque des revendications 1 à 6, **caractérisé en ce qu'**une enduction anticorrosive, préférablement une peinture antirouille, est appliquée entre l'enduction gonflante (intumescente) et le boîtier (10).

9. Procédé pour protéger un raccord pour tuyaux contre l'action d'un feu selon une quelconque des revendications précédentes, **caractérisé en ce que** l'enduction gonflante (intumescente) (8) est appliquée à surface extérieure du raccord au moins partiellement en cours de la production ou du montage préliminaire des parties mécaniques du raccord (3) dans l'usine productrice ou bien en cours du montage ou immédiatement après le montage du raccord (3).
